# FASCICULE DE BREVET EUROPEEN

(11) **EP 0 945 961 B1**
(45) Date de publication et mention de la délivrance du brevet: **12.01.2005**
(21) Numéro de dépôt: 99400665.8
(22) Date de dépôt: 18.03.1999
(51) Int. Cl.: H02K 11/00

(54) **Moteur électrique d'activation d'un organe fonctionnel de véhicule automobile**
Elektromotor zum Antrieb einer Betätigungseinrichtung eines Kraftfahrzeugs
Electric motor for driving an operating device of a vehicle

(30) Priorité: 26.03.1998 FR 9803769
(43) Date de publication de la demande: 29.09.1999
(73) Titulaire: ArvinMeritor Light Vehicle Systems-France, 45600 Sully sur Loire (FR)
(72) Inventeur: Lekeux, Jean Pierre, 14570 Clecy (FR); Breynaert, François, 14000 Caen (FR)
(74) Mandataire: Habasque, Etienne Joel Jean-François

(56) Documents cités:
- EP-B- 0 462 169
- EP-B- 0 482 040

## Description

La présente invention concerne un moteur électrique d'activation d'un organe fonctionnel de véhicule automobile.

Plus particulièrement, l'invention se rapporte à un moteur électrique du type comportant un bloc moteur muni d'au moins une portion en matière plastique.

Des moteurs électriques de ce type sont par exemple utilisés pour assurer la motorisation d'organes fonctionnels, tels que les sièges, les vitres, etc.., des véhicules automobiles.

De tels moteurs d'activation sont fréquemment associés à des circuits électroniques assurant des fonctions d'alimentation de ces moteurs et de contrôle de leur fonctionnement afin d'en améliorer la sécurité. De tels moteurs sont connus des documents EP 482 040 et EP 462 619.

C'est ainsi par exemple que des fonctions d'anti-pincement ont été associées aux motoréducteurs notamment d'activation de mécanismes de lève-vitre de véhicules.

Par ailleurs, l'intégration croissante de circuits électroniques à bord des véhicules pose un certain nombre de problèmes, notamment d'implantation de ceux-ci.

Le but de l'invention est donc de proposer un moteur de ce type qui puisse être associé facilement à des circuits électroniques.

A cet effet, l'invention a pour objet un moteur électrique d'activation d'un organe fonctionnel de véhicule automobile, du type comportant un bloc moteur comprenant au moins une portion en matière plastique, caractérisé en ce qu'un boîtier parallèlépipédique de réception d'au moins une carte de circuits électroniques, est prévu le long du bloc moteur, en ce que ce boîtier est formé de deux portions complémentaires présentant un plan de joint passant par un plan diagonal du boîtier et munies de moyens de réception de ladite carte et de moyens de fixation complémentaires et en ce que l'une des portions du boîtier est venue de matière avec la portion en matière plastique du bloc moteur et l'autre est munie d'une enveloppe de connecteur de raccordement du moteur au reste des circuits du véhicule.

On conçoit alors qu'une telle structure présente un certain nombre d'avantages, notamment au niveau de sa simplicité et des grandes capacités d'adaptation de celle-ci à différentes configurations d'alimentation et de raccordement possibles du moteur.

L'invention sera mieux comprise à l'aide de la description qui va suivre, donnée uniquement à titre d'exemple et faite en se référant aux dessins annexés, sur desquels :
- la Fig.1 représente une vue schématique éclatée d'un exemple de réalisation d'un moteur électrique selon l'invention; et
- la Fig.2 représente une vue de détail illustrant une portion de raccordement de ce moteur au reste des circuits du véhicule.

On reconnaît en effet sur ces figures, un moteur électrique désigné par la référence générale 1, d'activation par exemple d'un organe fonctionnel de véhicule automobile.

Un tel moteur comporte de façon classique un bloc moteur désigné par la référence générale 2 comportant par exemple une culasse en matériau métallique, désignée par la référence générale 3 et au moins une portion en matière plastique, désignée par la référence générale 4, formant par exemple une enveloppe de réception d'un mécanisme de réduction de ce moteur.

On sait en effet que des mécanismes de réduction de vitesse de rotation de l'arbre de sortie du moteur, sont interposés entre cet arbre et l'organe fonctionnel qu'il y a lieu d'actionner et que ces mécanismes sont disposés dans des carters en matière plastique.

Selon l'invention, un boîtier parallèlépipédique désigné par la référence générale 5 sur cette figure, de réception d'au moins une carte de circuits électroniques, désignée par exemple par la référence générale 6, est prévu le long du bloc moteur 2 et ce boîtier est formé de deux portions complémentaires, par exemple 5a et 5b, présentant un plan de joint P passant par un plan diagonal du boîtier.

De plus, ces portions complémentaires de boîtier sont munies de moyens 7 de réception d'une ou de plusieurs cartes de circuits électroniques 6 et de moyens de fixation complémentaires qui seront décrits plus en détail par la suite.

L'une des portions de ce boîtier, comme par exemple la portion 5a, est venue de matière avec la portion en matière plastique 4 du bloc moteur 2, tandis que l'autre portion, par exemple 5b, est munie d'une enveloppe 8 de connecteur de raccordement du moteur au reste des circuits du véhicule.

Les moyens 7 de réception de la carte de circuits électroniques 6 peuvent par exemple se présenter sous la forme de glissières ou de pions ou de tout autre moyen permettant de centrer et d'accrocher des cartes de ce type dans le boîtier.

Les moyens de fixation complémentaires des deux portions 5a et 5b du boîtier l'une sur l'autre, peuvent comporter des moyens à encliquetage élastique complémentaires comportant par exemple des crochets dont l'un est désigné par exemple par la référence générale 9 sur cette figure et est venu de matière avec la portion de boîtier 5b, ce crochet étant adapté pour coopérer avec des moyens complémentaires de butée 10 prévus sur l'autre portion 5a du boîtier.

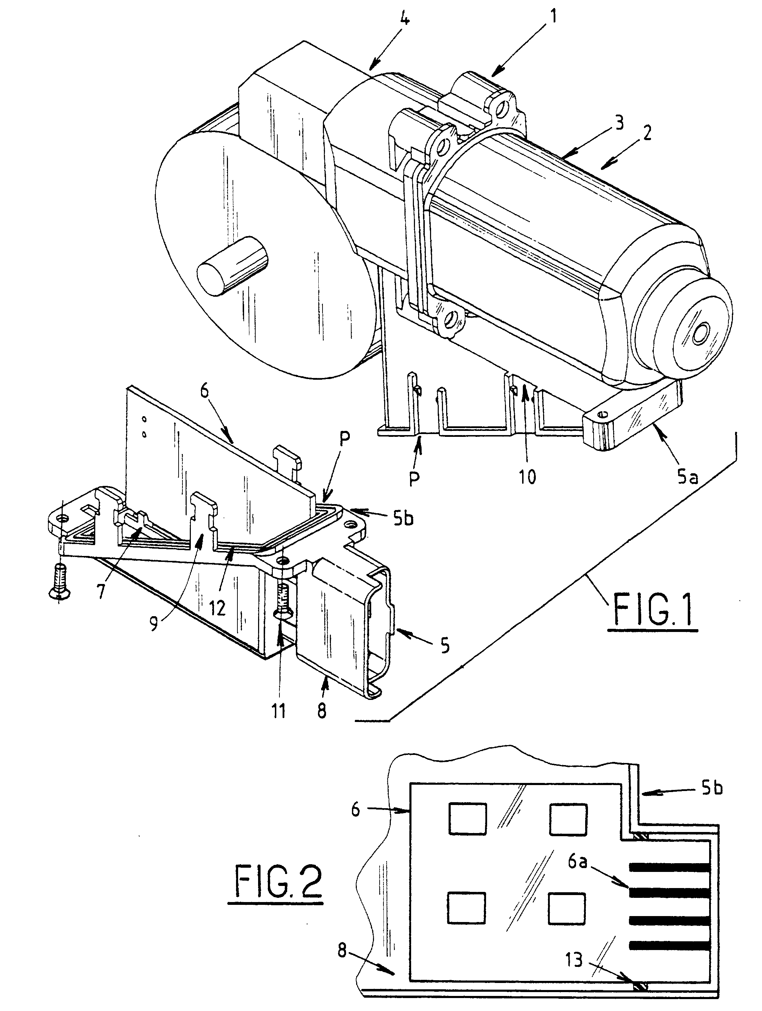

Ces moyens de fixation peuvent également comporter des moyens de vissage de ces portions de boîtier l'une sur l'autre, une vis de ces moyens étant désignée par exemple par la référence générale 11 sur la figure 1.

Un joint d'étanchéité désigné par la référence générale 12 peut également être prévu entre les deux portions de boîtier, ce joint étant par exemple reçu dans une gorge correspondante de l'une des portions du boîtier telle que par exemple la portion 5b.

Enfin, la carte de circuits électroniques désignée par la référence générale 6 peut comporter comme on peut le voir plus clairement sur la figure 2, une portion 6a de connexion adaptée pour faire saillie dans l'enveloppe 8 de connecteur de la portion correspondante 5b du boîtier.

Des moyens d'étanchéité désignés par exemple par la référence générale 13, peuvent alors être prévus entre cette enveloppe de connecteur 8 et cette portion 6a de la carte 6.

Bien entendu, ces moyens d'étanchéité peuvent être portés par un connecteur complémentaire du faisceau du véhicule, adapté pour s'engager dans l'enveloppe de connecteur 8, assurant ainsi une étanchéité entre cette enveloppe et le connecteur du faisceau du véhicule.

Il va de soi que bien que dans l'exemple de réalisation décrit, cette enveloppe 8 de cette portion 5b du boîtier soit ménagée sur l'un des côtés de celle-ci, cette enveloppe peut être ménagée par exemple sur la paroi de fond de celle-ci.

On conçoit alors qu'une telle structure présente un certain nombre d'avantages, notamment au niveau de sa simplicité et des grandes capacités d'adaptation de celle-ci à différentes configurations d'alimentation et de raccordement possibles du moteur.

De plus, l'insertion des cartes électroniques dans le boîtier est extrêmement simple du fait de la forme particulière des portions de celui-ci.

Une bonne étanchéité est assurée entre les portions de ce boîtier et au niveau des moyens de raccordement de celui-ci au reste des circuits du véhicule.

Bien entendu, d'autres modes de réalisation peuvent être envisagés.

## Revendications

1. Moteur électrique d'activation d'un organe fonctionnel de véhicule automobile, du type comportant un bloc moteur (2) comprenant au moins une portion (4) en matière plastique, un boîtier parallèlépipédique (5) de réception d'au moins une carte de circuits électroniques (6), ledit boîtier étant prévu le long du bloc moteur (2), et formé de deux portions complémentaires (5a,5b) présentant un plan de joint (P) et munies de moyens (7) de réception de ladite carte et de moyens de fixation (9,10;11) complémentaires, l'une (5a) des portions du boîtier étant venue de matière avec la portion en matière plastique (4) du bloc moteur et l'autre (5b) munie d'une enveloppe (8) de connecteur de raccordement du moteur au reste des circuits du véhicule **caractérisé en ce que** ledit plan de joint (P) passe par un plan diagonal du boîtier.

2. Moteur selon la revendication 1, **caractérisé en ce que** les moyens de réception de ladite carte de circuits électroniques (6) comportent des glissières (7).

3. Moteur selon la revendication 1 ou 2, **caractérisé en ce que** les moyens de fixation complémentaires des portions (5a,5b) de boîtier comprennent des moyens d'accrochage à encliquetage élastique (9,10).

4. Moteur selon l'une quelconque des revendications précédentes, **caractérisé en ce que** les moyens de fixation complémentaires des portions (5a,5b) de boîtier comprennent des moyens de vissage (11) de celles-ci l'une sur l'autre.

5. Moteur selon l'une quelconque des revendications précédentes, **caractérisé en ce qu'**un joint d'étanchéité (12) est prévu entre les deux portions (5a,5b) de boîtier.

6. Moteur selon l'une quelconque des revendications précédentes, **caractérisé en ce que** la carte de circuits électroniques (6) comporte une portion de connexion (6a) adaptée pour faire saillie dans l'enveloppe (8) de connecteur de raccordement de la portion correspondante (5b) du boîtier (5).

## Claims

1. Electric motor for driving an functional member of a motor vehicle, of the type having a motor unit (2) comprising at least one portion (4) made of plastics material, a parallelepiped-shaped housing (5) for receiving at least one electronic circuit board (6), said housing being provided along the motor unit (2) and being formed by two complementary portions (5a, 5b) which have a joining plane (P) and are equipped with means (7) for receiving said board and with complementary fixing means (9, 10; 11), one (5a) of the portions of the housing being integral with the portion of plastics material (4) of the motor unit and the other (5b) being provided with a connector casing (8) for connection of the motor to the remainder of the circuits of the vehicle, **characterised in that** said joining plane (P) passes through a diagonal plane of the housing.

2. Motor according to claim 1, **characterised in that** the means for receiving said electronic circuit board (6) comprise slides (7).

3. Motor according to claim 1 or 2, **characterised in that** the complementary fixing means for the housing portions (5a, 5b) comprise resilient snap-in coupling means (9, 10).

4. Motor according to any one of the preceding claims, **characterised in that** the complementary fixing means for the housing portions (5a, 5b) comprise means (11) for screwing one portion to the other.

5. Motor according to any one of the preceding claims, **characterised in that** a seal (12) is provided between the two housing portions (5a, 5b).

6. Motor according to any one of the preceding claims, **characterised in that** the electronic circuit board (6) comprises a connection portion (6a) which is adapted to project into the connector casing (8) for connection of the corresponding portion (5b) of the housing (5).

## Patentansprüche

1. Elektromotor zum Antrieb einer Betätigungseinrichtung eines Kraftfahrzeugs des Typs, der einen Motorblock (2) aufweist, der wenigstens einen Abschnitt (4) aus Kunststoff, ein Quadergehäuse (5) zur Aufnahme von wenigstens einer elektronischen Schaltungsplatine (6) umfasst, wobei das Gehäuse entlang dem Motorblock (2) vorgesehen ist und aus zwei sich ergänzenden Abschnitten (5a, 5b) gebildet ist, die eine Verbindungsebene (P) aufweisen und mit Mitteln (7) zur Aufnahme der Platine und sich ergänzenden Mitteln zur Befestigung (9, 10, 11) ausgestattet sind, wobei der eine (5a) der Gehäuseabschnitte aus dem gleichen Material besteht wie der Kunststoff-Abschnitt (4) des Motorblocks und der andere (5b) mit einer Umhüllung (8) für die Steckverbindung für den Anschluss des Motors an den Rest der Schaltkreise des Fahrzeugs ausgestattet ist, **dadurch gekennzeichnet, dass** die Verbindungsebene (P) durch eine diagonale Ebene des Gehäuses verläuft.

2. Motor nach Anspruch 1, **dadurch gekennzeichnet, dass** die Mittel zur Aufnahme der elektronischen Schaltkreisplatine (6) Führungsschienen (7) aufweisen.

3. Motor nach Anspruch 1 oder 2, **dadurch gekennzeichnet, dass** die sich ergänzenden Mittel zur Befestigung der Gehäuseabschnitte (5a, 5b) Ankopplungsmittel mit elastischer Schnappverbindung (9, 10) aufweisen.

4. Motor nach einem der vorhergehenden Ansprüche, **dadurch gekennzeichnet, dass** die sich ergänzenden Mittel zur Befestigung der Gehäuseabschnitte (5a, 5b) Mittel (11) zum Verschrauben derselben umfassen.

5. Motor nach einem der vorhergehenden Ansprüche, **dadurch gekennzeichnet, dass** eine Dichtung (12) zwischen den zwei Gehäuseabschnitten (5a, 5b) vorgesehen ist.

6. Motor nach einem der vorhergehenden Ansprüche, **dadurch gekennzeichnet, dass** die elektronische Schaltkreisplatine (6) einen Anschlussabschnitt (6a) umfasst, der so ausgelegt ist, dass er in der Umhüllung (8) der Steckverbindung zum Anschließen des entsprechenden Abschnitts (5b) des Gehäuses (5) hervorsteht
